# EUROPÄISCHE PATENTSCHRIFT

(11) **EP 1 488 681 B1**
(45) Veröffentlichungstag und Bekanntmachung des Hinweises auf die Patenterteilung: **30.05.2007**
(21) Anmeldenummer: 04014278.8
(22) Anmeldetag: 18.06.2004
(51) Int. Cl.: A01D 78/10, A01B 73/04

(54) **Heuwerbungsmaschine**
Haymaking machine
Machine de fenaison

(30) Priorität: 20.06.2003 DE 10327916
(43) Veröffentlichungstag der Anmeldung: 22.12.2004
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(56) Entgegenhaltungen:
- EP-A- 1 433 372
- DE-A- 2 715 642
- DE-A- 19 820 930
- DE-C- 19 716 379
- US-A- 4 159 749

## Beschreibung

Die Erfindung bezieht sich auf eine Heuwerbungsmaschine, insbesondere zum Schwaden von landwirtschaftlichem Halmgut mit vier umlaufend angetriebenen und über Stützräder auf dem Erdboden abstützbaren sowie über Ausleger aus einer Arbeits- und Betriebssteiiung in eine verschwenkte Transponslellung überführbaren Kreiselrechen in vorzugsweise in Fahrtrichtung im wesentlichen V-förmiger Anordnung.

Eine Heuwerbungsmaschine der vorgenannten Art ist beispielsweise aus der DE 197 16 379 C1 bekannt. Bei dieser Maschine sind vier Kreiselrechen vorgesehen, wobei jeweils zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer ungelenkten Maschinenachse gelegen. Zur Überführung in ihre Transportstellung sind die jeweiligen Kreiselrechen einwärts zu verschwenken. Die maximal mögliche Arbeitsbreite ist bei dieser Heuwerbungsmaschine gegenüber einer Heuwerbungsmaschine mit lediglich zwei Kreiselrechen deutlich erhöht, wird jedoch dem Wunsch nach noch größeren Arbeitsbreiten noch nicht gerecht, obgleich in der Transportstellung der Teile die Grenzen einer maximalen Transporthöhe schon erreicht sind.

Ein weiterer aus der EP 1 433 372 A1, die einen Stand der Technik nach Artikel 54(3) EPÜ darstellt, bekannt gewordener Kreiseischwader umfasst sechs gestaffelt zueinander angeordnete Schwadkreisel, die über, um horizontal ausgerichtete und in Fahrtrichtung weisende Schwenkachsen schwenkbar, an einem Fahrgestell angelenkte Ausleger aus einer bodenparallelen Arbeits- und Betriebsstellung in eine vertikale Transportstellung verbringbar sind. Der als selbstfahrende Heuwerbungsmaschine ausgebildete Kreiselschwader weist zwischen dem in Fahrtrichtung gesehen hinteren und dem mittleren Kreiselrechenpaar eine ungelenkte Maschinenachse auf, während dem vorderen Kreiselrechenpaar eine gelenkte Achse in Form eines Triebkopfes vorgeordnet ist.

Es ist daher Aufgabe der vorliegenden Erfindung, eine Heuwerbungsmaschine der eingangs genannten Art zu schaffen, mit der die wirksame Gesamtarbeitsbreite noch weiter zu erhöhen ist, bei der jedoch während der Arbeits- und Betriebsstellung die Kreiselrechen von einer Bedienperson visuell gut zu überprüfen sind und darüber hinaus eine sichere Straßenfahrt ermöglicht ist.

Zur Lösung dieser Aufgabe zeichnet sich die Heuwerbungsmaschine der eingangs genannten Art dadurch aus, dass die Heuwerbungsmaschine als selbstfahrende Heuwerbungsmaschine mit zwei weiteren Kreiselrechen und mit einer Fahrerkabine ausgebildet ist und die weiteren Kreiselrechen aus einer mit seitlichem Abstand im wesentlichen neben und/oder in Arbeitsfahrtrichtung vor der Fahrerkabine gelegenen Arbeits- und Betriebsstellung in eine in Arbeitsfahrtrichtung vor der Fahrerkabine gelegene Transportstellung hochschwenkbar sind, wobei zwischen den Vertikallängsmittelachsen der beiden in Fahrtrichtung hintereinander angeordneten, einer ungelenkten Maschinenachse vorgeordneten Kreiselrechen ein Abstand ausgebildet ist, der 40 bis 100 % eines Abstandsmaßes von Vertikallängsmittelachsen von in Fahrtrichtung benachbarten Kreiselrechen beträgt.

Damit ist eine Heuwerbungsmaschine zur Verfügung gestellt, bei der die wirksame Gesamtarbeitsbreite noch weiter zu erhöhen ist. Damit sind Arbeitsbreiten von z. B. 20 m durchaus realisierbar. Durch die Anordnung der weiteren Kreiselrechen in der Arbeits- und Betriebsstellung neben oder kurz vor der Fahrerkabine und in der Transportstellung vor der Fahrerkabine ist sichergestellt, dass auch bei solchen Arbeitsbreiten die jeweils äußeren und mithin die vorderen weiteren Kreiselrechen während der Arbeits- und Betriebsstellung von der Bedienperson zu kontrollieren sind, indem sich die Bedienperson in etwa auf gleicher Augenhöhe wie die äußeren vorderen Kreiselrechen befindet. Für die Transportstellung dieser weiteren Kreiselrechen lassen sich diese seitlich neben oder seitlich vor die Fahrerkabine hochverschwenken, so dass während der Transportfahrt eine Position der weiteren Kreiselrechen eingenommen werden kann, in der die maximal zulässige Straßenfahrtbreite für eine derartige selbstfahrende Heuwerbungsmaschine konstruktiv eingehalten werden kann, darüber hinaus jedoch die für die Straßenfahrt notwendige Übersicht für die Bedienperson besteht.

Bevorzugterweise ist die Fahrerkabine in der Transportstellung zwischen den weiteren hochverschwenkten vorderen Kreiselrechen und den mittleren Kreiselrechen angeordnet. Um mit konstruktiv beherrschbaren Mitteln den Lageversatz der Kreiselrechen zwischen der Arbeits- und Betriebsstellung und der Transportstellung mit einfachen Mitteln bewerkstelligen zu können, sind die Kreiselrechen zweckmäßigerweise an Auslegern abgestützt, deren Längsmittelachse zur Maschinenlängsmittelachse in der Arbeits- und Betriebstellung einen spitzen Winkel einnimmt. Dabei ist es ebenfalls möglich, dass der Ausleger zwei oder mehrgeteilt ausgebildet ist, wobei die Längsmittelachse des Auslegers insgesamt durch die Vertikallängsmittelachse bzw. die Rotationsachse eines weiteren vorderen Kreiselrechens und dem Mittelpunkt der Schwenkachse am Maschinenchassis bestimmt wird, die den spitzen Winkel zur Maschinenlängsachse einnimmt.

Es ist ebenfalls möglich, dass zusätzlich zur Hochverschwenkung der weiteren vorderen Kreiselrechen die Fahrerkabine ihrerseits in Maschinenlängsrichtung translatorisch verstellbar ausgebildet ist, so dass diese aus einer Stellung in Arbeits-und Betriebsposition wegbewegbar ist in eine Transportposition, so dass zum einen die Straßenfahrt erleichtert ist, zum anderen aber auch in der Arbeits- und Betriebsstellung eine Position ermöglicht wird, in der die Bedienperson die insbesondere äußeren Kreiselrechen gut kontrollieren kann.

Vorzugsweise hat die selbstfahrende Heuwerbungsmaschine eine in Fahrtrichtung vordere gelenkte Maschinenachse und eine hintere ungelenkte Maschinenachse. Dabei ist die Anordnung der weiteren Kreiselrechen derart gewählt, dass das Abstandsmaß zwischen der Vertikallängsmittelachse eines weiteren Kreiselrechens und einer ungelenkten Maschinenachse größer als 80 % des Abstandsmaßes zwischen der gelenkten und der ungelenkten Maschinenachse beträgt. Werden diese Abstandsmaße konstruktiv eingehalten, ist sichergestellt, dass bei einer selbstfahrenden Heuwerbungsmaschine mit einer vorgesehenen großen Arbeitsbreite auch an einem Vorgewende ein exakter und sauberer Schwad gebildet werden kann.

Weitere vorteilhafte Ausgestaltungen ergeben sich aus weiteren Unteransprüchen, der nachfolgenden Beschreibung und der Zeichnung. In der Zeichnung zeigen:
- Figur 1:: Eine schematische Draufsicht auf ein Ausführungsbeispiel einer selbstfahrenden Heuwerbungsmaschine nach der Erfindung, und
- Figur 2:: eine Seitenansicht des Ausführungsbeispiels nach Figur 1 in der Transportstellung der Kreiselrechen.

In der Zeichnung sind allgemein gleichwirkende Teile mit übereinstimmenden Bezugszeichen beziffert.

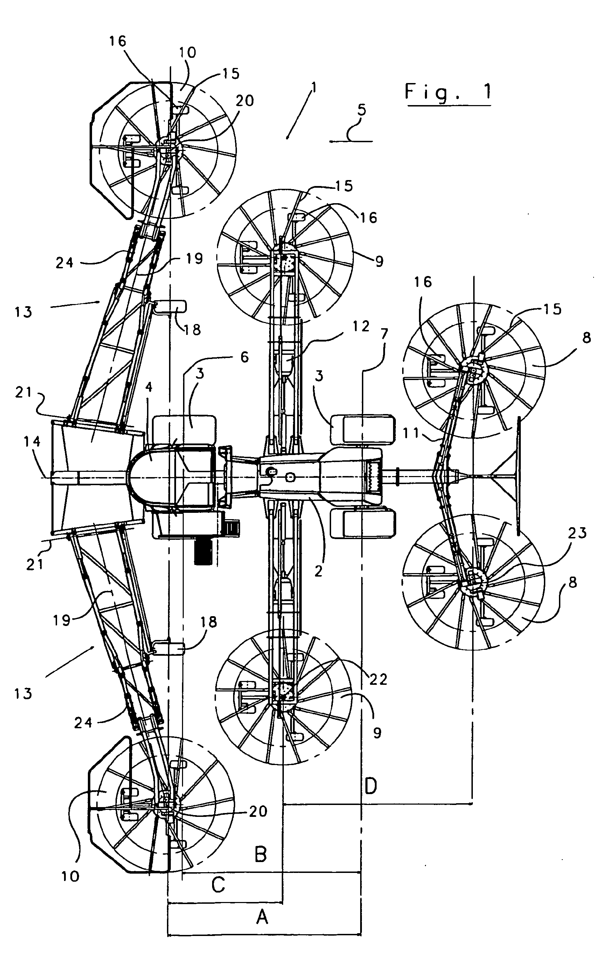

In der Zeichnung ist allgemein mit 1 eine Heuwerbungsmaschine beziffert, die als selbstfahrende Heuwerbungsmaschine ausgebildet ist. Die selbstfahrende Heuwerbungsmaschine 1 hat ein Fahrzeugchassis 2, Laufräder 3 sowie eine Fahrerkabine 4 und eine Arbeitsfahrtrichtung 5. In Arbeitsfahrtrichtung 5 hat sie eine gelenkte Maschinenachse 6 und eine ungelenkte Maschinenachse 7. In in Fahrtrichtung 5 V-förmiger Anordnung sind hintere Kreiselrechen 8, mittlere Kreiselrechen 9 und zwei weitere vordere Kreiselrechen 10 vorgesehen, die jeweils über Ausleger 11, 12 sowie 13 an dem Fahrzeugchassis 2 mit der Maschinenlängsachse 14 abgestützt sind. Die Kreiselrechen 8, 9 und 10 haben jeweils Rechzinken 15 und sind über Laufräder 16 während ihrer Arbeits- und Betriebsstellung, wie in Figur 1 veranschaulicht, auf dem Erdboden abstützbar. Die Fahrerkabine 4 ist derart vorgesehen, dass sich in der Arbeits- und Betriebsstellung der beiden vorderen weiteren Kreiselrechen 10 sich diese mit seitlichem Abstand zur Fahrerkabine 4 in etwa neben der Fahrerkabine 4 erstrecken. Es ist selbstverständlich ebenfalls möglich, dass sich die weiteren vorderen Kreiselrechen 10 in Arbeitsrichtung 5 mit seitlichem Abstand kurz vor der Fahrerkabine in der Arbeits- und Transportstellung der Kreiselrechen 10 befinden, so dass die Bedienperson die beiden vorderen und mithin äußeren Kreiselrechen während der Arbeitsfahrt gut visuell kontrollieren kann.

Die Fahrerkabine 4 befindet sich mithin in dem veranschaulichten Ausführungsbeispiel zwischen den vorderen Kreiselrechen 10 und den in Arbeitsfahrtrichtung 5 benachbart nachgeordneten Kreiselrechen 9.

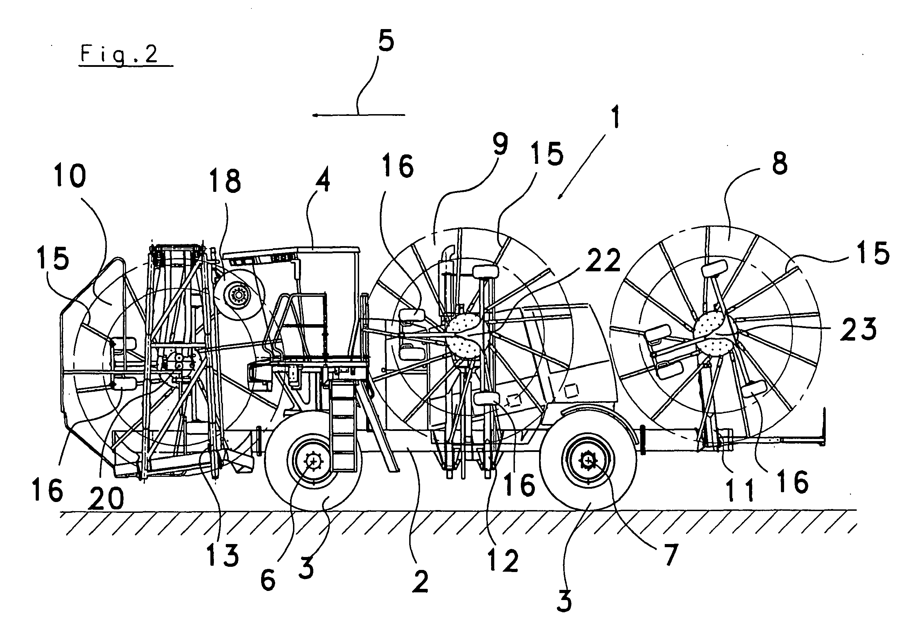

Die Ausleger 13 der beiden vorderen Kreiselrechen 10, die noch über zusätzliche Stützräder 18 auf dem Erdboden in ihrer Arbeits- und Betriebsstellung abstützbar sind, haben eine jeweilige Längsachse 19, die die vertikale Längsmittelachse 20 der weiteren Kreiselrechen 10, sowie den Mittelpunkt der Schwenkachse 21 der Ausleger 13 unter einem spitzen Winkel zur Maschinenlängsachse 14 einnehmen. Durch diese konstruktive Gestaltung ist während einer Hochverschwenkung der weiteren äußeren Kreiselrechen 10 in die in Figur 2 gezeigte Transportstellung eine Transportposition der äußeren Kreiselrechen 10 erreichbar, in der sie sich vor der Fahrerkabine 4 in Arbeitsfahrtrichtung 5 erstrecken, und zwar mit einem derartigen Abstandsmaß zueinander, dass die Bedienperson eine freie Sicht in Arbeitsfahrtrichtung 5 nach vorne hat.

Um auch in Kurvenfahrten bzw. auf einem Vorgewende einen sauberen und exakten Schwad legen zu können, haben die vorgesehenen Kreiselrechen konstruktiv vorgegebene Abstände zueinander, und zwar in ihrer jeweiligen Arbeits- und Betriebsstellung.
So ist die Vertikallängsmittelachse 20 des jeweiligen weiteren vorderen Kreiselrechens 10 so vorgesehen, dass das Abstandsmaß A der beiden Vertikallängsmittelachsen 20 zwischen 80 % und 130 % des Abstandsmaßes B zwischen der gelenkten und der ungelenkten Maschinenachse 6 bzw. 7 beträgt. Darüber hinaus ist das Abstandsmaß C zwischen der jeweiligen Vertikallängsmittelachse 20 eines weiteren Kreiselrechens 10 und der Vertikallängsmittelachse 22 eines in Fahrtrichtung dahinter gelegenen Kreiselrechens 9 in der Arbeits- und Betriebsstellung kleiner als in der jeweiligen Transportstellung der Kreiselrechen 9 bzw. 10, so dass sich der mittlere Kreiselrechen 9 geradlinig weg von der Maschinenlängsachse 14 zwischen den in Arbeitsfahrtrichtung 5 hintereinander angeordneten Laufrädern 3 erstrecken kann.

Zudem ist bevorzugtermassen das Abstandsmaß C zwischen den vorgenannten Vertikallängsmittelachsen 20 und 22 der beiden in Fahrtrichtung angeordneten Kreiselrechen geringer als das Abstandsmaß D der Vertikallängsmittelachsen 22 und 23 der zwei anderen in Fahrtrichtung hintereinander angeordneten Kreiselrechen 9 bzw. 8. Damit ist sichergestellt, dass auch in Kurvenfahrten bei der angestrebten enormen Arbeitsbreite eine saubere Schwadbildung möglich ist. Um diese saubere Schwadbildung zu unterstützen, beträgt das Abstandsmaß C der Vertikallängsmittelachsen 20 und 22 der beiden Kreiselrechen 10 bzw. 9, die der ungelenkten Maschinenachse 7 vorgeordnet sind, ca. 40 - 100 % des Abstandsmaßes D der Vertikallängsmittelachsen 22 und 23 der beiden anderen benachbarten Kreiselrechen 9 bzw. 8.

Der jeweilige Ausleger 13 der beiden weiteren Kreiselrechen 10 ist geteilt ausgebildet und hat einen Entstützarm 24, der relativ zum anderen Auslegerbereich des Auslegers 13 verschwenkbar ist, so dass er gegenüber diesem einklappbar ist und eine Transportposition ermöglicht mit einem aufrechtstehenden Ausleger 13 und einwärts verschwenkten Kreiselrechen 10, wie dies in Figur 2 veranschaulicht ist.

## Patentansprüche

1. Heuwerbungsmaschine (1), insbesondere zum Schwaden von landwirtschaftlichem Halmgut, mit vier umlaufend angetriebenen und über Stützräder (16) auf dem Erdboden abstützbaren sowie über Ausleger (11, 12) aus einer Arbeits-und Betriebsstellung in eine verschwenkte Transportstellung überführbaren Kreiselrechen (8, 9) in vorzugsweise in Fahrtrichtung im wesentlichen V-förmiger Anordnung, welche als selbstfahrende Heuwerbungsmaschine (1) mit zumindest zwei weiteren Kreiselrechen (10) sowie mit einer Fahrerkabine (4) ausgebildet ist und deren weitere Kreiselrechen (10) in ihrer Arbeits- und Betriebsstellung mit seitlichem Abstand im wesentlichen neben der Fahrerkabine (4) gelegen sind, wobei ein Abstandsmaß (C) von Vertikallängsmittelachsen (20, 22) der beiden in Fahrtrichtung (5) hintereinander angeordneten, einer ungelenkten Maschinenachse vorgeordneten Kreiselrechen (9, 10) 40 bis 100 % eines Abstandsmaßes (D) von Vertikallängsmittelachsen (22, 23) von in Fahrtrichtung (5) benachbarten Kreiselrechen (9, 8) beträgt.

2. Heuwerbungsmaschine nach Anspruch 1, **dadurch gekennzeichnet, dass** die Fahrerkabine (4) in der Transportstellung zwischen den weiteren hochverschwenkten Kreiselrechen (10) und mittleren Kreiselrechen (9) angeordnet ist.

3. Heuwerbungsmaschine nach einem der Ansprüche 1 oder 2, **dadurch gekennzeichnet, dass** die Ausleger (13) der weiteren Kreiselrechen (10) in der Arbeits-und Betriebsstellung unter einem spitzen Winkel zur Maschinenlängsmittelachse (14) ausgerichtet sind.

4. Heuwerbungsmaschine nach einem der Ansprüche 1 bis 3, **dadurch gekennzeichnet, dass** die Fahrerkabine (4) in Maschinenlängsrichtung translatorisch verstellbar ausgebildet und aus einer Transportposition in eine Arbeitsposition bewegbar ist.

5. Heuwerbungsmaschine nach einem der Ansprüche 1 bis 4, **dadurch gekennzeichnet, dass** die Heuwerbungsmaschine (1) eine in Fahrtrichtung (5) vordere gelenkte Maschinenachse (6) und eine hintere ungelenkte Maschinenachse (7) aufweist und dass das Abstandsmaß (A) zwischen den Vertikallängsmittelachsen (20) der weiteren Kreiselrechen (10) und der ungelenkten Maschinenachse (7) zwischen 80 % und 130 % des Abstandsmaßes (B) zwischen der gelenkten (6) und der ungelenkten Maschinenachse (7) beträgt.

6. Heuwerbungsmaschine nach einem der Ansprüche 1 bis 5, **dadurch gekennzeichnet, dass** das Abstandsmaß (C) der Vertikallängsmittelachsen (20) der weiteren Kreiselrechen (10) von den Vertikallängsmittelachsen (22) der in Fahrtrichtung (5) dahintergelegenen Kreiselrechen (9) in der Arbeits- und Betriebsstellung kleiner ist als in der Transportstellung.

7. Heuwerbungsmaschine nach einem der Ansprüche 1 bis 6, **dadurch gekennzeichnet, dass** das Abstandsmaß (C) der Vertikallängsmittelachsen (20, 22) von zwei in Fahrtrichtung hintereinander angeordneten Kreiselrechen (10, 9) geringer ist als das Abstandsmaß (D) der Vertikallängsmittelachsen (22, 23) der beiden anderen in Fahrtrichtung benachbart angeordneten Kreiselrechen (9, 8).

8. Heuwerbungsmaschine nach einem der Ansprüche 5 bis 7, **dadurch gekennzeichnet, dass** die weiteren Kreiselrechen (10) einer gelenkten Maschinenachse (6) in Fahrtrichtung (5) vorgeordnet sind.

9. Heuwerbungsmaschine nach einem der Ansprüche 1 bis 8, **dadurch gekennzeichnet, dass** die weiteren Kreiselrechen (10) über Ausleger (13) abstützbar sind, die sich gegenüber dem Erdboden über Laufräder (18) abstützen.

10. Heuwerbungsmaschine nach einem der Ansprüche 1 bis 9, **dadurch gekennzeichnet, dass** die weiteren Kreiselrechen (10) jeweils über einen zumindest zweigeteilten Ausleger (13) abstützbar sind, wobei ein mit dem Kreiselrechen (10) verbundener Endstützarm (24) des Auslegers (13) relativ zum anderen Auslegerbereich verschwenkbar ist.

## Claims

1. Haymaking machine (1), particularly for windrowing stalked agricultural crops, having four rotary rakes (8, 9) which are driven in rotation, which are able to be supported on the ground by means of supporting wheels (16), which are able to be transferred by means of booms (11,12) from a working and operating position to a pivoted position for transport and which are arranged substantially in a vee shape preferably in the direction of travel, which haymaking machine (1) is in the form of a self-propelled haymaking machine (1) which has at least two further rotary rakes (10) and a driver's cab (4) and whose further rotary rakes (10) are situated, in their working and operating position, substantially next to the driver's cab (4) at a lateral spacing therefrom, wherein a spacing (C) between the vertical longitudinal centre axes (20, 22) of those two rotary rakes (9, 10) which are positioned one behind the other in the direction of travel (5) and which are positioned in front of an unsteered axle of the machine is 40 to 100% of a spacing (D) between the vertical longitudinal centre axes (22, 23) of rotary rakes (9, 8) which are adjacent in the direction of travel (5).

2. Haymaking machine according to claim 1, **characterised in that**, in the position for transport, the driver's cab (4) is situated between the further rotary rakes (10), which are pivoted up, and the centre rotary rakes (9).

3. Haymaking machine according to either of claims 1 and 2, **characterised in that**, in the working and operating position, the booms (13) of the further rotary rakes (10) are aligned at an acute angle to the longitudinal centre axis (14) of the machine.

4. Haymaking machine according to one of claims 1 to 3, **characterised in that**, in the longitudinal direction of the machine, the driver's cab (4) is designed to be adjustable in translation and is movable from a position for transport to a working position.

5. Haymaking machine according to one of claims 1 to 4, **characterised in that** the haymaking machine (1) has a steered machine axle (6) which is at the front in the direction of travel (5) and a rear, unsteered machine axle (7), and **in that** the spacing (A) between the vertical longitudinal centre axis (20) of the further rotary rakes (10) and the unsteered machine axle (7) is between 80% and 130% of the spacing (B) between the steered machine axle (6) and the unsteered machine axle (7).

6. Haymaking machine according to one of claims 1 to 5, **characterised in that** the spacing (C) between the vertical longitudinal centre axes (20) of the further rotary rakes (10) and the vertical longitudinal centre axes (22) of the rotary rakes (9) situated behind them in the direction of travel (5) is smaller in the working and operating position than in the position for transport.

7. Haymaking machine according to one of claims 1 to 6, **characterised in that** the spacing (C) between the vertical longitudinal centre axes (20, 22) of two rotary rakes (10, 9) which are arranged one behind the other in the direction of travel is less than the spacing (D) between the vertical longitudinal centre axes (22, 23) of the other two rotary rakes (9, 8) which are arranged to be adjacent in the direction of travel.

8. Haymaking machine according to one of claims 5 to 7, **characterised in that** the further rotary rakes (10) are positioned in front of a steered machine axle (6) in the direction of travel (5).

9. Haymaking machine according to one of claims 1 to 8, **characterised in that** the further rotary rakes (10) are able to be supported by means of booms (13) which are supported in relation to the ground by wheels (18) for travel.

10. Haymaking machine according to one of claims 1 to 9, **characterised in that** the further rotary rakes (10) are each able to be supported by means of a boom (13) which is divided at least into two, a terminal supporting arm (24) of the boom (13), which terminal supporting arm (24) is connected to the rotary rake (10), being pivotable relative to the other region of the boom.

## Revendications

1. Machine de fenaison (1), notamment pour andainer des produits agricoles en tiges, comportant quatre rotors râteleurs (8, 9) entraînés en rotation et appuyés sur le sol par des roues de sustentation (16) et qui peuvent être déplacés d'une position de travail et de fonctionnement dans une position de transport, basculée, par des bras (11, 12), ces rotors étant de préférence disposés suivant une forme pratiquement en V dans la direction de déplacement,
cette machine étant une machine de fenaison (1), automotrice, ayant au moins deux autres rotors râteleurs (10) ainsi qu'une cabine de conduite (4) et en position de travail et de fonctionnement, les autres rotors râteleurs (10) sont latéralement écartés, pratiquement à côté de la cabine de conduite (4),
la distance (C) des axes centraux longitudinaux verticaux (20, 22) des deux rotors râteleurs (9, 10) disposés l'un derrière l'autre dans la direction de déplacement (5) devant un essieu fixe de la machine, représente entre 40 à 100 % de la distance (D) des axes centraux longitudinaux verticaux (22, 23) des rotors râteleurs (9, 8) voisins dans la direction de déplacement (5).

2. Machine de fenaison selon la revendication 1,
**caractérisée en ce qu'**
en position de transport, la cabine de conduite (4) se trouve entre les autres rotors râteleurs (10), relevés, et les rotors râteleurs intermédiaires (9).

3. Machine de fenaison selon l'une des revendications 1 ou 2,
**caractérisée en ce qu'**
en position de travail et de fonctionnement, les bras (13) des autres rotors râteleurs (10) font un angle aigu par rapport à l'axe longitudinal médian de la machine (14).

4. Machine de fenaison selon l'une des revendications 1 à 3,
**caractérisée en ce que**
la cabine de conduite (4) est réglable en translation dans la direction longitudinale de la machine et peut être déplacée entre une position de transport et une position de travail.

5. Machine de fenaison selon l'une des revendications 1 à 4,
**caractérisée en ce que**
dans la direction de déplacement (5), la machine de fenaison (1) comporte un essieu directeur avant (6) et un essieu fixe arrière (7) et
la distance (A) entre l'axe central longitudinal vertical (20) des autres rotors râteleurs (10) et de l'essieu fixe (7) représente entre 80 % et 130 % de la distance (B) entre l'essieu directeur (6) et l'essieu fixe (7).

6. Machine de fenaison selon l'une des revendications 1 à 5,
**caractérisée en ce qu'**
en position de travail et de fonctionnement, la distance (C) de l'axe central longitudinal vertical (20) des autres rotors râteleurs (10) par rapport à l'axe central longitudinal vertical (22) des rotors râteleurs (9) situés derrière, dans la direction de déplacement (5), est inférieure à la distance en position de transport.

7. Machine de fenaison selon l'une des revendications 1 à 6,
**caractérisée en ce que**
la distance (C) des axes centraux longitudinaux verticaux (20, 22) de deux rotors râteleurs (10, 9) disposés l'un derrière l'autre dans la direction de déplacement, est inférieure à la distance (D) des axes centraux longitudinaux verticaux (22, 23) des deux autres rotors râteleurs (9, 8) voisins dans la direction de déplacement.

8. Machine de fenaison selon l'une des revendications 5 à 7,
**caractérisée en ce que**
les autres rotors râteleurs (10) sont situés en amont de l'essieu directeur (6) selon la direction de déplacement (5).

9. Machine de fenaison selon l'une des revendications 1 à 8,
**caractérisée en ce que**
les autres rotors râteleurs (10) sont soutenus par des bras (13) appuyés sur le sol par des roues de roulement (18).

10. Machine de fenaison selon l'une des revendications 1 à 9,
**caractérisée en ce que**
les autres rotors râteleurs (10) sont soutenus par un bras (13) au moins en deux parties et un bras d'appui d'extrémité (24) relié au rotor râteleur (10) faisant partie du bras (13) peut pivoter par rapport à l'autre zone de bras.
